# EUROPEAN PATENT APPLICATION

(11) **EP 2 293 269 A2**
(43) Date of publication of application: **09.03.2011**
(21) Application number: 09762607.1
(22) Date of filing: 27.05.2009
(51) Int. Cl.: G08G 1/0962

(54) **USER-VIEW OUTPUT SYSTEM AND METHOD**

(30) Priority: 11.06.2008 KR 20080054657
(71) Applicant: Thinkwaresystems Corp, Seoul 138-051 (KR)
(72) Inventor: SEO, Jung Kak, Seoul 134-809 (KR); KIM, Yunhan, Gyeonggi-do 435-764 (KR)
(74) Representative: Cabinet Plasseraud
(86) International application number: PCT/KR2009/002789
(87) International publication number: WO 2009/151220

(57) **Abstract**

Disclosed are a user view output system and method. The user view output system for outputting a screen from a user's point of view includes a data reception unit configured to receive data to be outputted to a screen, a camera placed at a user's point of view, a viewing angle control unit configured to control an output of the camera so that the output corresponds to the user's field of view, and a user view output unit configured to output an image, captured by the camera, to the screen on the basis of the data.

## Description

### [Technical Field]

The present invention relates to a user view output system and method and, more specifically, to a user view output system and method, in which a screen is outputted from a user's point of view by positioning a camera at the location of the user and controlling the user's field of view.

### [Background Art]

In case where a screen for a driver, etc. is outputted, there is a need for a technique for representing things more realistically through a 3D output screen and enabling a driver to drive more easily and accurately. In the output of a 3D screen, if the screen is outputted from a user's point of view, things can be represented more actually and realistically.

In case where a screen is outputted from a user's point of view, there may be a need for a technique for outputting an additional map where not only a current location, but also a screen to display a long distance that will pass in the future is displayed.

Accordingly, there is a need for a technique for increasing the visibility of things and outputting a screen of a user's point of view for representing realistic things. Also, there is a need for a technique for satisfying various needs of users through an additional mini-map.

### [Disclosure]

### [Technical Problem]

The present invention provides a user view output system and method, in which a screen is outputted from a user's point of view by positioning a camera at the location of the user and controlling the user's field of view, thereby being capable of representing realistic 3D objects and more easily checking a current location.

The present invention provides a user view output system and method, in which a screen is outputted from a user's point of view and, at the same time, a mini-map screen is outputted at a different point of view, thereby being capable of seeing both a current location and a screen of other area and thus satisfying various needs of users.

A user view output system according to an embodiment of the present invention includes a data reception unit configured to receive data to be outputted to a screen, a camera placed at a user's point of view, a viewing angle control unit configured to control an output of the camera so that the output corresponds to the user's field of view, and a user view output unit configured to output an image, captured by the camera, to the screen on the basis of the data.

According to an aspect of the present invention, the user view output system may further include a mini-map output unit configured to output an image captured at a point of view of the camera placed over the user.

According to an aspect of the present invention, the mini-map may be outputted with consideration taken of a path line and the location of a building on the screen from the user's point of view.

According to an aspect of the present invention, the size of the mini-map may be a predetermined size or more and also a size to minimize an area in which the mini-map overlaps with the path line and the building.

According to an aspect of the present invention, a screen outputted from the user's point of view and the mini-map may maintain cameras independently operated and share the data outputted to the screen.

According to an aspect of the present invention, when the screen is touched, the output mode of the screen may be switched to a screen at a point of view of the camera placed over the user.

A user view output method according to an embodiment of the present invention comprises the steps of receiving data to be outputted to a screen, placing a camera at a user's point of view, controlling an output of the camera so that the output corresponds to the user's field of view, and outputting an image, captured by the camera, to the screen on the basis of the data.

According to an aspect of the present invention, the user view output method may further include the step of outputting an image captured at a point of view of the camera placed over the user.

### [Advantageous Effects]

According to an embodiment of the present invention, there are provided a user view output system and method, in which a screen is outputted from a user's point of view by positioning a camera at the location of the user and controlling the user's field of view, thereby being capable of representing realistic 3D objects and more easily checking a current location.

According to an embodiment of the present invention, there are provided a user view output system and method, in which a screen is outputted from a user's point of view and, at the same time, a mini-map screen is outputted at a different point of view, thereby being capable of seeing both a current location and a screen of other area and thus satisfying various needs of users.

### [Brief Description of the Drawings]

FIG. 1 is a flowchart illustrating a user view output system in an embodiment of the present invention;
FIG. 2 is a diagram showing a user view output system in another embodiment of the present invention;
FIG. 3 is a flowchart illustrating a user view output method in an embodiment of the present invention;
FIG. 4 is a diagram illustrating a change of a screen output mode when a user screen is touched in an embodiment of the present invention; and
FIG. 5 is a diagram illustrating a user view output screen outputting a mini-map in an embodiment of the present invention.

### [Best Mode]

Hereafter, embodiments of the present invention are described in detail with reference to the accompanying drawings. However, the present invention is not restricted or limited to the embodiments. The same reference numbers are used throughout the drawings to refer to the same.

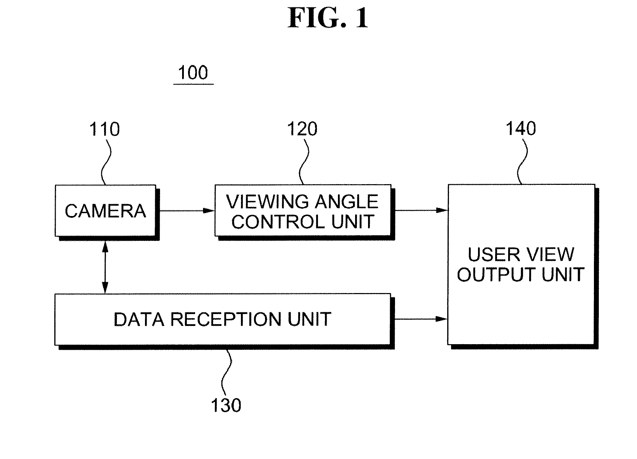

FIG. 1 is a flowchart illustrating a user view output system in an embodiment of the present invention.

Referring to FIG. 1, the user view output system 100 includes a data reception unit 130, a camera 110, a viewing angle control unit 120, and a user view output unit 140.

The data reception unit 130 receives map data necessary to output a screen from a database. Here, the map data may include roads, facilities, and a Point of Interest (POI) which will be outputted to the screen.

The camera 110 is located from a user's point of view. Here, the camera is assumed to be a user's eyes watching a screen, and it refers to an object watching 3D space. Here, the user's point of view refers to a point of view at which a terminal's user drives moving means. The user's point of view may refer to a driver's point of view in the case of a driver for vehicle, etc. and may refer to a walker's point of view in case of a walker, etc.

The viewing angle control unit 120 controls the output of the camera so that it corresponds to a user's field of view. That is, the viewing angle control unit 120 can make the camera's field of view coincident with a person's field of view so that the camera's field of view is similar to the person's field of view.

The user view output unit 140 controls an image captured by the camera 110 on the basis of the screen output data so that the image is outputted to a screen. That is, the user view output unit 140 can output an image, captured at a point of view where the camera 110 is placed, to the screen on the basis of the screen output data.

In case where a user touches the output screen of a user's point of view, it is determined that a mode of an output screen is sought to be changed and the output screen mode may be changed. Here, the changed output screen mode may be a top view mode of 2D. That is, a mode may be previously set so that it can be easily recognized by a user.

As described above, the camera is placed at the location of a user on a map, and a screen is outputted from the user's point of view by controlling the user's field of view. Accordingly, realistic 3D objects can be represented, and a current location can be checked more easily.

### [Mode for Invention]

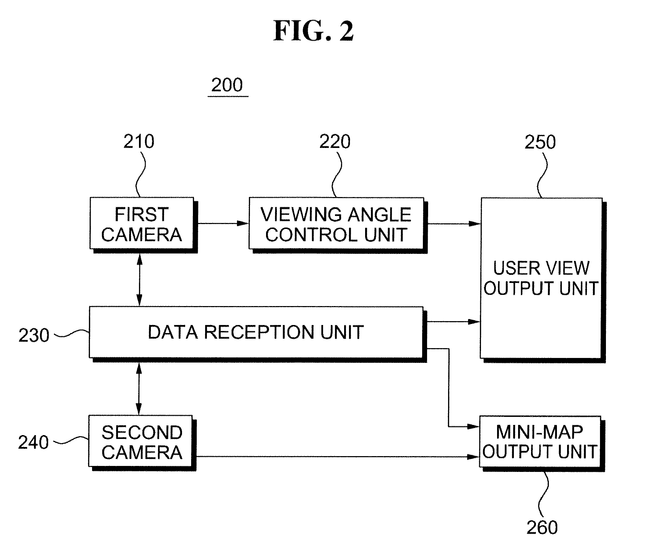

FIG. 2 is a diagram showing a user view output system in another embodiment of the present invention.

FIG. 2 shows another embodiment of the user view output system. The user view output system 200 may include a data reception unit 230, a first camera 210, a second camera 240, a viewing angle control unit 220, a user view output unit 250, and a mini-map output unit 260. That is, an image captured from a user's point of view can be outputted and, at the same time, a mini-map to display a screen captured from another point of view can be outputted.

As in FIG. 1, the data reception unit 230 receives, from a database, map data to be outputted to a screen. Here, a mini-map and a screen from a user's point of view are outputted in another view mode for the same point. Data received by the data reception unit 230 can be shared and, when the data is outputted to a screen, different modes can be outputted on the basis of the respective cameras.

The first camera 210 is a camera placed at a user's point of view, and the second camera 240 is a camera placed over the user. Here, the second camera 240 may be placed in the sky which is spaced apart from a user at a predetermined distance. The second camera 240 can provide a top view which provides an image captured from a user's point of view as if it looks down from the sky.

The viewing angle control unit 220 controls the output of the first camera 210 so that the output corresponds to a user's field of view.

The user view output unit 250 can output an image from a user's point of view by outputting an image captured by the first camera 210.

The mini-map output unit 260 can output an image, captured by the second camera 240, to a predetermined part of a screen. Here, a mini-map may be a top view image of a 2D mode.

Furthermore, the mini-map can output at least one of a turn point and a Point of Interest (POI). That is, an output screen from a user's point of view does not display a turn point, a Point of Interest (POI), and the rear of a user. To supplement this, a mini-map to display a turn point, a Point of Interest (POI), and the rear of a user can be outputted together with the output screen. That is, a user view screen and a mini-map may be set up by a user so that they can be outputted at the same time.

Here, in case where a user touches a predetermined area of the mini-map or a predetermined area of the user view screen, the mini-map can be enlarged and outputted as a full screen. In case where a user touches the mini-map or a predetermined area of the user view screen, it may be determined that the mini-map is sought to be viewed as an enlarged screen and coordinates are sought to be moved through the touch. In this case, the mini-map can be enlarged so that it is viewed as a full screen, thereby being capable of improving user convenience. Here, the mini-map can be enlarged and outputted as a full screen and, at the same time, the camera may be moved to a touched area of the mini-map or a touched area of the user view screen, and the entire screen may be outputted.

Here, in case where a predetermined area of the mini-map is touched after the mini-map is enlarged to a full screen, the second camera 240 of the mini-map may move to the touched area and output a screen. Accordingly, in case where a user is sought to view his rear side, the user can view a desired place by touching a desired area within the mini-map.

Furthermore, the location and size of a mini-map outputted as a screen may be determined with consideration taken of a path line on a screen at a point of view and of the location of a building. Here, the size of the mini-map may be a predetermined size or greater and also a size which minimizes an area overlapping with the path line and the building. For example, the mini-map can set a minimum size that can be easily recognized by a user and calculate and set an optimal size which is greater than the set minimum size and also covers a path line, buildings, and so on, outputted to a screen from a user's point of view, to the minimum extent. Here, the size of the mini-map may be changed according to experimental values, and the like and may be changed and set by a user.

As described above, a user view from a user's point of view and a mini-map screen from another point of view can be outputted at the same time. Accordingly, a current location and a screen to display another area can be seen at the same time. Furthermore, there is an advantage in that various needs of users can be satisfied because a turn point, a POI, etc. which are not displayed in a user view can be outputted.

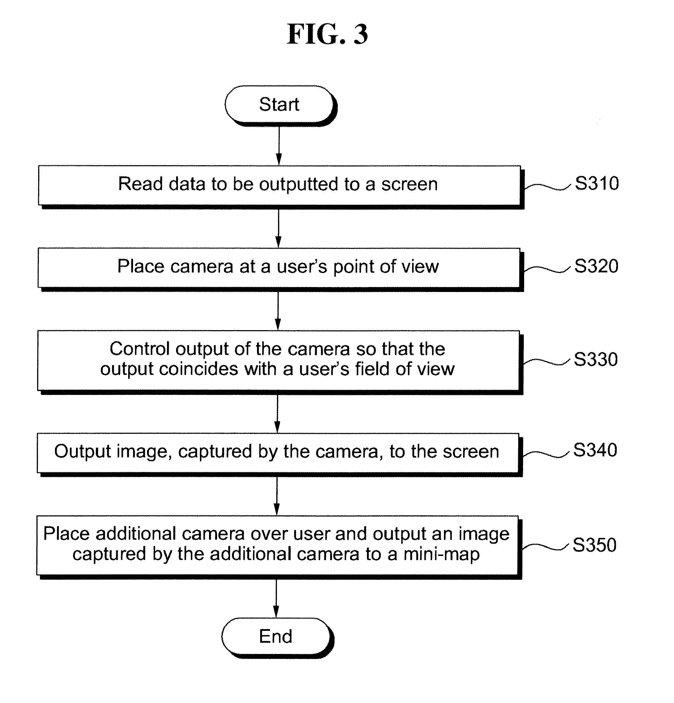

FIG. 3 is a flowchart illustrating a user view output method in an embodiment of the present invention.

Referring to FIG. 3, at step S310, data to be outputted to a screen is received. Here, the data refers to map data, and so on and may include road data, facility data, and so on which are necessary for the screen output.

At step S320, the camera is placed at a user's point of view. In the case of a 3D image, a point of view may be differently outputted according to the location of the camera, and the camera may be placed at a user's point of view in order to output an image viewed from the user's point of view.

At step S330, the output of the camera is controlled so that the output corresponds to the user's field of view. That is, the camera's field of view can be made coincident with a person's field of view so that the camera's field of view is similar to the person's field of view.

At step S340, an image captured by the camera is outputted on the basis of the data outputted to the screen. That is, the image captured from the camera's point of view can be outputted to the screen on the basis of the received map data, etc.

At step S350, an additional camera is placed over the user, and an image captured by the additional camera can be outputted to to mini-map. The output image from the user's point of view does not include a turn point, a POI, and so on, and so the additional mini-map is outputted at the same time in order to help user convenience. Here, the mini-map has the additional camera, and the data for the screen output and the screen output data for the output image of the user's point of view can be shared. Furthermore, the mini-map may be a top view seen over the user and may have 2D.

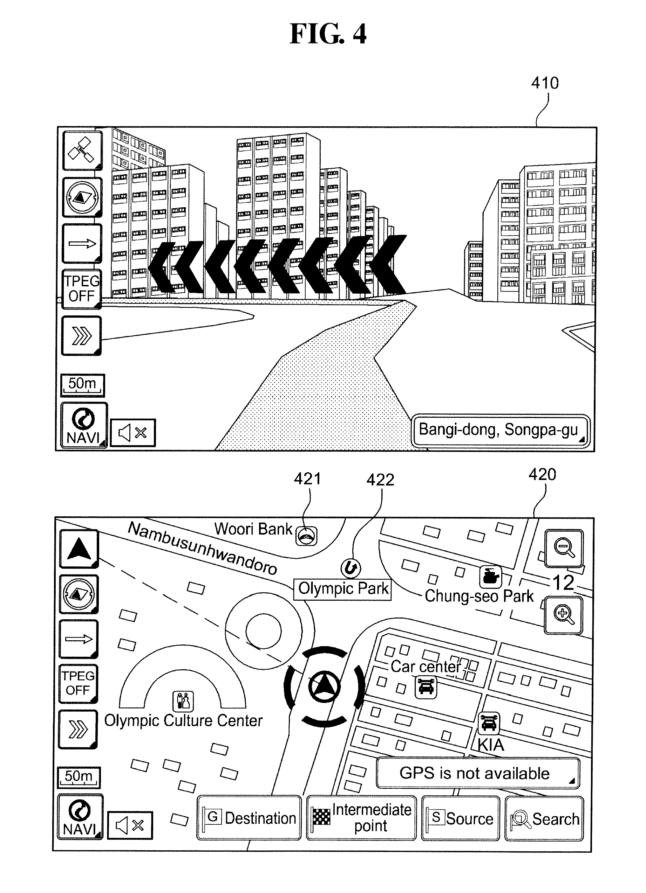

FIG. 4 is a diagram illustrating a change of a screen output mode when a user screen is touched in an embodiment of the present invention.

Referring to FIG. 4, a user view screen 410 provides a user with a 3D screen from the user's point of view. Here, the user view can provide a more actual and realistic image so that roads can be recognized more easily and a point can be accurately checked. In case where a user wants to check his rear side or to check a turn point, a POI, and so on, the user may change a current screen to a screen of another mode by touching the current screen. For example, as shown in FIG. 4, the user view screen 410 can be changed to a top view screen 420 by touching the user view screen 410, and a turn point 422, a POI 421, and so on are displayed in the top view screen. Furthermore, the rear of a user can be checked in the top view screen. In case where a user touches a desired point in the top view screen, the camera can move to the corresponding point, and a corresponding screen can be outputted.

Since the user view screen is provided as described above, a more realistic screen with high visibility can be provided to a user, and a screen can be changed to a screen of another view mode through a simple method, such as touching the user view screen. Accordingly, user convenience can be improved.

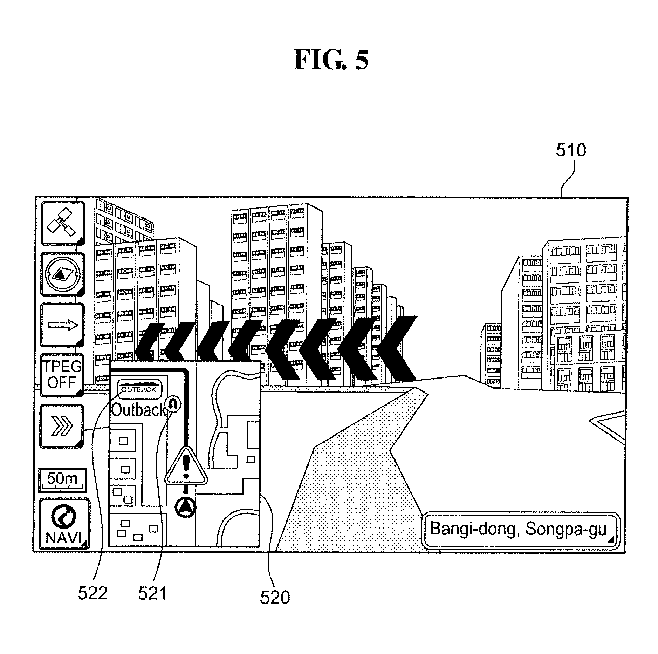

FIG. 5 is a diagram illustrating a user view output screen outputting a mini-map in an embodiment of the present invention.

Referring to FIG. 5, a user view screen 510 and a mini-map 520 can be outputted at the same time. Here, the mini-map may be outputted at a predetermined size or more so that a user can easily recognize the mini-map. In case where the size of the mini-map is excessively increased, a practical effect of the user view mode is difficult to obtain because the increased mini-map overlaps with buildings, a path line, etc. on the user view screen 510. In order to avoid this problem, the size of the mini-map can be set to a size which reduces the range in which the mini-map overlaps with buildings, a path line, etc. to the maximum extent. That is, the size of the mini-map is a predetermined size or more and also a size which minimizes the area in which the mini-map overlaps with the path line and the building. An appropriate value of the size may be selected according to experiments, etc. Furthermore, in case where a user is sought to adjust the size of the mini-map, the user randomly set the size of the mini-map. In case where the mini-map 520 and the user view screen 510 are outputted at the same time as described above, a turn point 521, a POI 522, etc. which are not displayed in a user view can be displayed, and a user can view his rear side.

As described above, the user view to output a screen from a user's point of view is provided. Accordingly, a more actual and realistic screen can be outputted, and so a user can check roads situations more easily. Furthermore, since the user view screen and the mini-map are outputted at the same time, a screen in which the output of a realistic screen, and the output of a turn point, a POI, etc. can be checked at the same time can be provided.

Furthermore, the user view output method according to the embodiment of the present invention includes a computer-readable recording medium including program commands for executing operations implemented by various computers. The computer-readable recording medium may include program commands, data files, and data structures either alone or in combination. The program commands may be specially designed and configured for the present invention or may be known to those having ordinary skill in the computer software field. Examples of the computer-readable recording medium may include hardware devices specially configured to store and perform program commands, such as magnetic media such as hard disk, floppy disk, and magnetic tapes, optical media such as CD-ROM and DVD, magneto-optical media such as floptical disk, ROM, RAM, and flash memory. Examples of the program commands may include not only machine codes, such as ones produced by a compiler, but also high-level language codes executable by a computer using an interpreter.

Although some embodiments of the present invention have been described, the present invention is not limited to the above embodiments. Those skilled in the art may modify the present invention in various ways from the above description. Accordingly, the scope of the present invention should not be limited to the above-described embodiments, but should be defined by the scope of the appended claims and equivalent thereof.

[Industrial Applicability]

## Claims

1. A user view output system, comprising:
a data reception unit configured to receive data to be outputted to a screen;
a camera placed at a user's point of view;
a viewing angle control unit configured to control an output of the camera so that the output corresponds to the user's field of view; and
a user view output unit configured to output an image, captured by the camera, to the screen on the basis of the data.

2. The user view output system of claim 1, further comprising a mini-map output unit configured to output an image captured at a point of view of the camera placed over the user.

3. The user view output system of claim 2, wherein the mini-map outputs at least one of a turn point and a Point of Interest (POI).

4. The user view output system of claim 2, wherein the mini-map is outputted with consideration taken of a path line and a location of a building on the screen from the user's point of view.

5. The user view output system of claim 4, wherein a size of the mini-map is a predetermined size or more and also a size to minimize an area in which the mini-map overlaps with the path line and the building.

6. The user view output system of claim 2, wherein a screen outputted from the user's point of view and the mini-map maintain cameras independently operated and share the data outputted to the screen.

7. The user view output system of claim 2, wherein when the screen is touched, the mini-map is enlarged and outputted as a full screen.

8. The user view output system of claim 7, wherein when a predetermined region within the mini-map is touched after the full screen of the mini-map is outputted, the camera moves to the touched predetermined region, and a screen is outputted.

9. The user view output system of claim 1, wherein when the screen is touched, an output mode of the screen is switched to a screen at a point of view of the camera placed over the user.

10. A user view output method, comprising the steps of:
receiving data to be outputted to a screen;
placing a camera at a user's point of view;
controlling an output of the camera so that the output corresponds to the user's field of view; and
outputting an image, captured by the camera, to the screen on the basis of the data.

11. The user view output method of claim 10, further comprising the step of outputting an image captured at a point of view of the camera placed over the user.

12. The user view output method of claim 11, wherein the mini-map outputs at least one of a turn point and a Point of Interest (POI).

13. The user view output method of claim 11, wherein the mini-map is outputted with consideration taken of a path line and a location of a building on the screen from the user's point of view.

14. The user view output method of claim 13, wherein a size of the mini-map is a predetermined size or more and also a size to minimize an area in which the mini-map overlaps with the path line and the building.

15. The user view output method of claim 11, wherein a screen outputted from the user's point of view and the mini-map maintain cameras independently operated and share the data outputted to the screen.

16. The user view output method of claim 11, wherein when the screen is touched, the mini-map is enlarged and outputted as a full screen.

17. The user view output method of claim 16, wherein when a predetermined region within the mini-map is touched after the full screen of the mini-map is outputted, the camera moves to the touched predetermined region, and a screen is outputted.

18. The user view output method of claim 10, further comprising the step of, when the screen is touched, an output mode of the screen is switched to a screen at a point of view of the camera placed over the user.

19. A computer-readable recording medium on which a program for executing a method according to any one of claims 10 to 18 is recorded.
